# EUROPEAN PATENT SPECIFICATION

(11) **EP 3 431 317 B1**
(45) Date of publication and mention of the grant of the patent: **04.12.2024**
(21) Application number: 17766186.5
(22) Date of filing: 14.02.2017
(51) Int. Cl.: B60K 20/02, G05G 1/02, G05G 1/04, G05G 1/08

(54) **SHIFT DEVICE**
UMSCHALTVORRICHTUNG
DISPOSITIF DE CHANGEMENT DE VITESSE

(30) Priority: 16.03.2016 JP 2016052755
(43) Date of publication of application: 23.01.2019
(73) Proprietor: Alps Alpine Co., Ltd., Tokyo 145-8501 (JP)
(72) Inventor: ISHIKAWA, Shinji, Tokyo 145-8501 (JP); MAEDA, Takuya, Tokyo 145-8501 (JP)
(74) Representative: Schmitt-Nilson Schraud Waibel Wohlfrom Patentanwälte Partnerschaft mbB
(86) International application number: PCT/JP2017/005317
(87) International publication number: WO 2017/159179

(56) References cited:
- JP-A- 2000 038 045
- JP-A- 2014 201 185
- JP-A- H04 203 660
- JP-A- H11 245 680
- JP-A- S58 105 316
- US-A1- 2012 048 050

## Description

### TECHNICAL FIELD

The present invention relates to a shift device in which an operation lever is operated to be moved to a plurality of positions by an operation of an operation knob.

### BACKGROUND ART

In a vehicle equipped with an automatic transmission, it is possible to set a shift transmission position of the automatic transmission by operating an operation lever of a shift device disposed in the vicinity of a center console box.

In recent years, a shift-by-wire system has been developed as such a shift device, in which a switching position of an operation lever is detected by a sensor and an actuator is operated by the switching signal to switch the connection state of a transmission. In such a shift device based on the shift-by-wire system, because a mechanical structure such as a link mechanism is not required, the size can be easily reduced. Therefore, it is possible to give a degree of freedom to the layout of a shift device in the vehicle interior. Further, because the operation lever can be operated with a relatively small force, the shift change operation is easy.

Conventionally, there is known a shift device provided with a structure for restricting a movement operation of an operation lever and releasing the restriction (for example, refer to Patent Document 1).

### [Prior Art Document]

### [Patent Document]

[Patent Document 1] Japanese Laid-open Patent Publication No. H4-203660

US 2012/0048050 A1 shows shift lever device. In the shift lever device, the upward movement of a pull rod within a shift lever separates an engaging portion from detent grooves, and the downward movement of the pull rod within the shift lever engages the engaging portion with the detent grooves in a shift direction. The shift lever device includes a restricting arm protruding from the shift lever along a shift pivot shaft, and a swing limiter disposed along the shift direction in such a manner as to be engageable with and

disengageable from the restricting arm. JP S58 105316 A discloses a shift lever device according to the preamble of claim 1.

### DISCLOSURE OF THE INVENTION

### PROBLEM TO BE SOLVED BY THE INVENTION

Patent Document 1 discloses an operation device for an automatic transmission. In this operation device, a shaft portion of an operation lever is formed to have a hollow shape, and a lock mechanism that restricts a movement operation of the operation lever is incorporated in the shaft portion. The above lock mechanism has a configuration in which a knob button provided on the operation lever is operated to be pushed in a lateral direction, and this movement is transferred to a movement in the axial direction of the operation lever by a cam surface to lock a movement operation of the operation lever.

Here, the shaft portion of the operation lever is formed to have a hollow shape to incorporate the lock mechanism, and the strength of the shaft portion is not sufficiently secured. Therefore, there is a problem that the operation lever may be deformed depending on how the load is applied to the operation lever during a movement operation.

Also, because the lock mechanism is incorporated in the shaft portion of the operation lever, incorporation of the components in the shaft portion is complicated and there is a problem that the assembly property is inferior.

In view of the above, an object of the present invention is to provide a shift device that can secure strength with respect to an operation lever and of which assembly property of components of a lock mechanism is favorable.

### MEANS FOR SOLVING THE PROBLEM

In order to achieve the above described object, a shift device according to claim 1 is provided.

According to such a configuration, because a solid operation lever can be used as the operation lever, the strength of the operation lever can be secured. Also, the components of the lock mechanism that restricts the movement operation of the operation lever are attached to the outside of the operation lever, and the assembly property of the components of the lock mechanism is favorable.
According to such
a configuration, the locking portion and the guide portion constituting the lock mechanism are formed together with the slide member, the number of components is few, the component cost can be reduced, and the assembling property is preferable.

Preferably, according to the present invention, in the above described shift device, an operation restriction release button that is able to be pushed in a direction orthogonal to a movement direction of the slide member is incorporated in the operation knob, a cam mechanism that transfers a driving force of the operation restriction release button to the movement direction of the slide member is provided between the operation restriction release button and the slide member, and the restriction of the movement operation of the operation lever is released by a pushing operation of the operation restriction release button. According to such a configuration, because the restriction of the operation lever can be released at the home position, the operation lever can be operated to be moved in a desired direction reliably.

Preferably, according to the present invention, in a shift device according to any one of claims 1 to 3 in the above described shift device, the operation knob and the operation lever are integrally mounted by a connection portion provided in the slide member. According to such a configuration, because the operation knob and the operation lever can be mounted to be together inside the cylindrical slide member, the mounting space of the components is efficient and the movement amount of the slide member can also be secured.

Preferably, according to the present invention, in the above described shift device, the slide member is integrally attached to the operation knob, and the restriction of the movement operation of the operation lever is released by pushing the operation knob in an axial direction of the operation lever. According to such a configuration, the restriction of the operation lever, of which the movement operation has been restricted at the home position, can be released at the home position, and the operation lever can be operated to be moved in a desired direction reliably.

Preferably, according to the present invention, the above described shift device includes a return mechanism configured to automatically return the operation lever to the home position after the movement operation of the operation lever. According to such a configuration, because the operation lever is necessarily returned to the home position after a movement operation, a next movement operation can be easily and reliably performed.

Preferably, according to the present invention, in the above described shift device, a first position and a second position are provided at positions interposing the home position in a linear direction, and a neutral position of the operation lever is provided at a position in a direction different from a movement operation direction of the first position and the second position. According to such a configuration, because the neutral position of the operation lever is set in a direction different from the operation direction of the first position and the second position of the operation lever, it is possible to prevent the operation lever from being accidentally operated to the neutral position.

### EFFECTS OF THE INVENTION

According to the present invention, it is possible to provide a shift device that can secure strength with respect to an operation lever and of which assembly property of components of a lock mechanism is favorable.

### BRIEF DESCRIPTION OF THE DRAWINGS

FIG. 1 is an external plan view of a shift device according to a first embodiment of the present invention;
FIG. 2 is a diagram that describes positions to which an operation lever in the shift device, which is illustrated in FIG. 1, is operated to be moved, in which (a) is a plan view illustrating a gate portion of the shift device, which is illustrated in FIG. 1, and (b) is a schematic view illustrating an arrangement of the positions of the operation lever;
FIG. 3 is a cross-sectional view of the shift device, which is illustrated in FIG. 1, taken along the line α-α;
FIG. 4 is an enlarged cross-sectional view of a portion of a lock mechanism of the shift device, which is illustrated in FIG. 3;
FIG. 5 is a cross-sectional view of the shift device, which is illustrated in FIG. 1, taken along the line β-β;
FIG. 6 is a plan view of a portion of an operation restriction release button of the shift device, which is illustrated in FIG. 1;
FIG. 7 is a cross-sectional view illustrating a state in which the lock mechanism of the shift device, which is illustrated in FIG. 1, is released and operated to be at a rear position;
FIG. 8 is a cross-sectional view of a shift device according to a second embodiment of the present invention;
FIG. 9 is a cross-sectional view illustrating a state in which the lock mechanism of the shift device, which is illustrated in FIG. 8, is released and operated to be at a front position;
FIG. 10 is an external plan view of a shift device according to a third embodiment of the present invention; and
FIG. 11 is a diagram that describes positions to which an operation lever in the shift device, which is illustrated in FIG. 10, is operated to be moved, in which (a) is a plan view illustrating a gate portion, and (b) is a schematic view illustrating an arrangement of the positions of the operation lever.

### EMBODIMENT FOR CARRYING OUT THE INVENTION

In the following, shift devices according to embodiments of the present invention will be described with reference to the drawings. Note that although the shift devices described below are applied to shift-by-wire automatic transmissions mounted on vehicles or the like, targets to which a shift device according to the present invention are applied are not limited to this and can be changed as appropriate. For example, a shift device according to the present invention can also be applied to an operation lever of a household electronic device or the like.

### <First Embodiment>

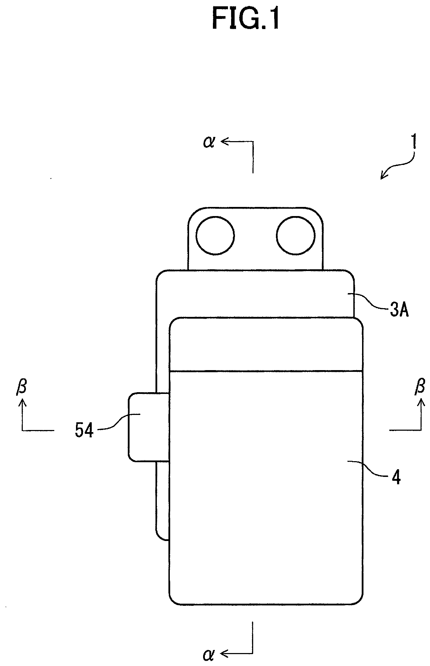

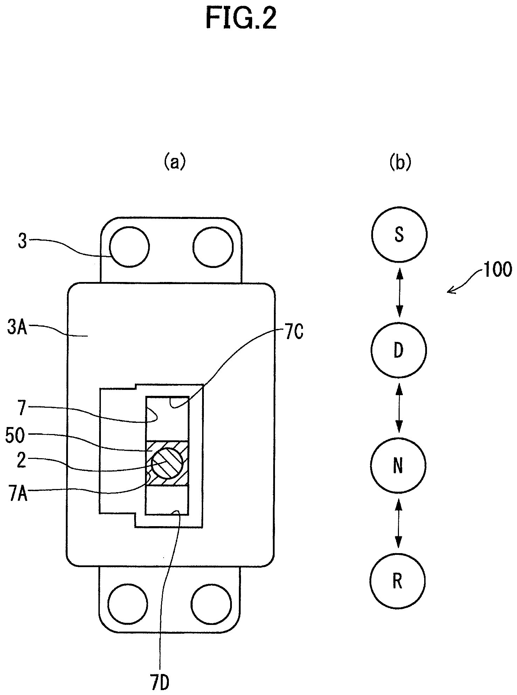

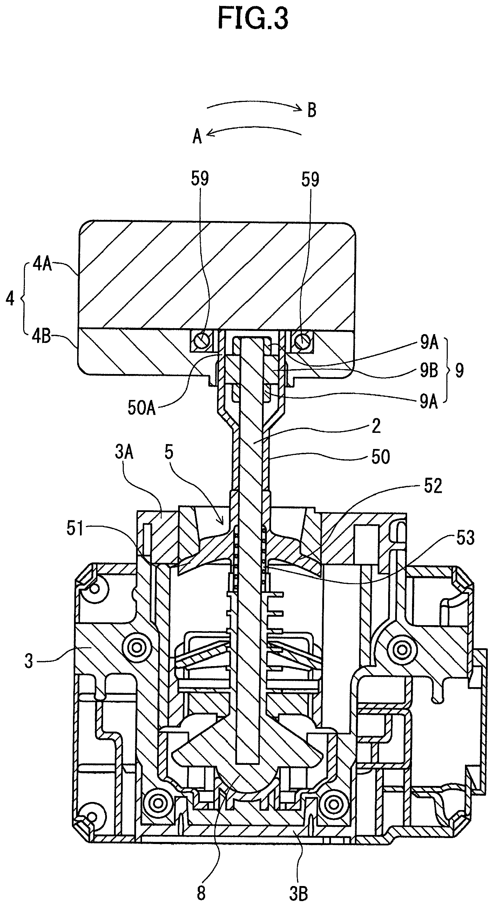

FIG. 1 is an external plan view of a shift device according to a first embodiment. FIG. 2 is a diagram that describes positions to which an operation lever in the shift device, which is illustrated in FIG. 1, is operated to be moved, in which (a) is a plan view illustrating a gate portion of the shift device, which is illustrated in FIG. 1, and (b) is a schematic view illustrating an arrangement of the positions of the operation lever. FIG. 3 is a cross-sectional view of the shift device, which is illustrated in FIG. 1, taken along the line α-α.

### (Shift Device)

A shift device 1 includes a substantially tetrahedral housing 3 that serves as a main body, an operation lever 2 supported by the housing to be able to be swung, an operation knob 4 that is attached to a front end side of the operation lever 2 and that is operated to move the operation lever 2 to a plurality of positions, a lock mechanism 5 that restricts the movement operation of the operation lever 2 at a home position, and a return mechanism (which is not illustrated) including a cam surface and an actuator that elastically contacts the cam surface to automatically return the operation lever 2 to the home position. Note that the home position is a reference position of an operation of the operation lever 2, and is an initial position when the operation lever 2 is operated to be moved to a respective position.

As illustrated in FIG. 2 (a), an upper cover 3A is attached to an upper portion of the housing 3. A vertically long gate portion 7 for guiding and defining a movement operation direction of the operation lever 2 is opened and formed on the substantially central portion of the upper cover 3A.

The operation lever 2 is inserted in the gate portion 7, and the base end side of the operation lever 2 is supported by a bearing portion 8 provided on a bottom portion 3B of the housing 3. The operation lever 2 is supported to be able to be swung in the direction of the arrow A or in the direction of the arrow B in FIG. 3 around the bearing portion 8 as a fulcrum.

An operation knob 4 for operating and swinging the operation lever 2 is attached to the front end side of the operation lever 2. The operation knob 4 is formed by combining an upper knob portion 4A and a lower knob portion 4B together.

### (Movement Operation Positions)

As illustrated in FIG. 2 (a), for the gate portion 7, three positions that are a home position 7A, a front position 7C, and a rear position 7D are provided as positions to which the operation lever 2 can be physically moved.

A position display plate (which is not illustrated) is attached near the upper cover 3A of the housing 3. As illustrated in FIG. 2 (b), on the position display plate, characters 100 for the respective positions are formed to indicate position states that the vehicle can take according to a shift signal transmitted from the shift device 1 in accordance with an operation of the operation lever 2. Also, in order to indicate which position state is selected for the vehicle at the present time, the character of the selected position is lit. Therefore, when a driver performs a movement operation from the home position 7A to the front position 7C or the rear position 7D, the driver can operate the operation lever 2 to move to a desired position while confirming the characters 100 indicating the position state of the vehicle.

FIG. 2 (a) and FIG. 3 illustrate a state in which the operation lever 2 is positioned at the home position 7A. At the time of starting the engine, the operation lever 2 is positioned at the home position 7A. Note that the home position 7A is a position, to which the operation lever 2 automatically returns upon the operation being released by releasing of the hand or the like after the operation lever 2 is operated to be moved to the respective position 7C or 7D.

The N position displayed on the position display plate is a position that indicates the neutral state of a drive mechanism of the vehicle. For example, the N position is set at the time of starting of the above described engine and, is a position set between the respective position states. The D position is a position that indicates a state in which the vehicle can move in the forward direction. The R position is a position that indicates a state in which the vehicle can move in the backward direction. Further, the S position is a position that indicates a state in which the vehicle can be operated with deceleration drive (engine brake). A change in the respective position states of the vehicle corresponds to the position display position on the position display plate. By operating the operation lever 2 from the home position 7A in the direction towards the front position 7C or the rear position 7D, it is possible to selectively change the position state of the vehicle. For example, when the operation lever 2 is operated to be moved from the state of the D position or the state of the R position to the state of the N position, the operation lever 2 is operated to be moved from the position where the current position state is displayed on the position display plate in the same direction as the direction towards the display of the N position. Note that when the operation lever 2 is operated and moved, it is required to release the lock mechanism 5 by operating and pushing an operation restriction release button 54 that releases the lock mechanism 5 of the operation lever 2 described later. The operation lever 2 is structured such that a desired position state is selected while preventing a movement operation unintended by the driver.

### (Lock Mechanism)

As illustrated in FIG. 3, inside the housing 3, the lock mechanism 5 that restricts a movement operation of the operation lever 2 is incorporated. Note that FIG. 3 illustrates a lock state in which the operation lever 2 is positioned at the home position 7A and its movement operation is restricted. The lock mechanism 5 includes a cylindrical slide member 50 assembled to be able to be reciprocated along the outer periphery of the operation lever 2. The slide member 50 is formed of polybutylene terephthalate resin (PBT resin) or the like having excellent abrasion resistance.

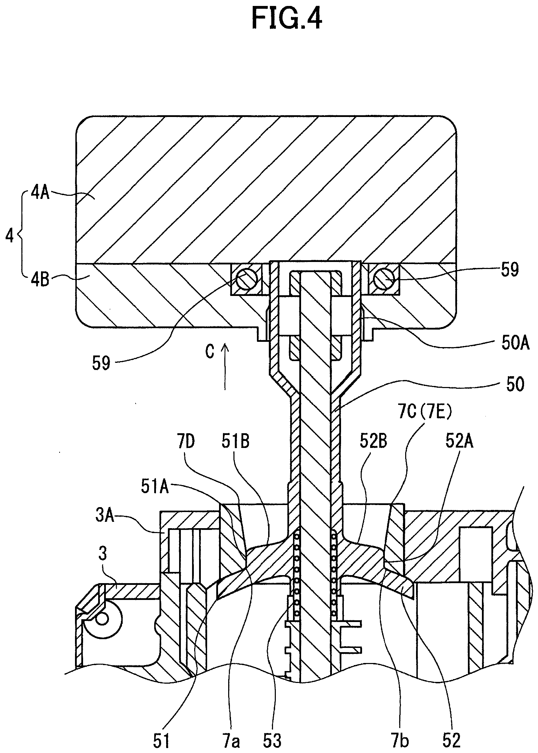

As illustrated in FIG. 4, the base end side of the slide member 50 is arranged in the housing 3 via the shift gate portion 7 formed on the upper cover 3A of the housing 3. On the base end side of the slide member 50, a first protrusion portion 51 and a second protrusion portion 52 each protruding in the movement operation direction (the direction of the arrow A or the direction of the arrow B in FIG. 3) of the operation lever 2 are integrally formed. The width between the tips of the respective protrusion portions 51 and 52 is formed to be wider than the opening width (the width between the front position 7C and the rear position 7D) in the operation direction (the vertical direction in FIG. 2) of the gate portion 7. On the upper surfaces of the respective protrusion portions 51 and 52, a first locking portion 51A and a second locking portion 52A are integrally formed for restricting the movement operation of the operation lever 2.

A compression coil spring 53 that biases the slide member 50 in the direction towards the operation knob 4 is assembled on the inner peripheral portion on the base end side of the slide member 50. The respective locking portions 51A and 52A are made to contact with lower end edges 7a and 7b of the shift gate portion 7 by the biasing force of the compression coil spring 53, and the slide member 50 is restricted from moving in the direction of the arrow C in FIG. 4. Note that the compression coil spring 53 also includes a function of automatically returning the slide member 50 to a position at which the movement operation is restricted by the biasing force when the operation lever 2 automatically returns to the home position 7A by a return mechanism, which is not illustrated.

On the base end side upper surfaces of the respective protrusion portions 51 and 52, guide portions 51B and 52B are integrally formed to guide the operation of the operation lever 2 after the restriction of the movement operation of the operation lever 2 is released.

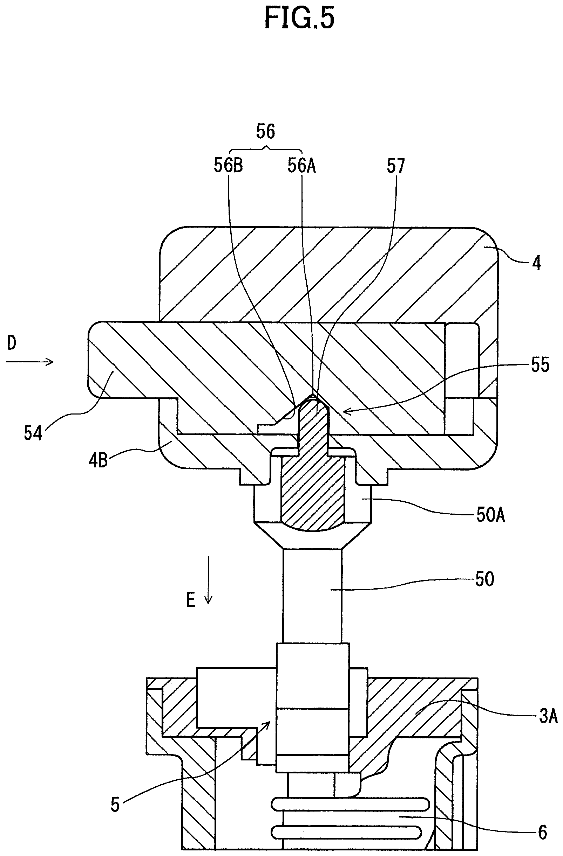

As illustrated in FIG. 5, the front end side of the slider member 50 is incorporated in the lower knob portion 4B to be able to reciprocate. In the operation knob 4, the operation restriction release button 54 for releasing the restriction of the movement operation of the operation lever 2 is incorporated. The operation restriction release button 54 is incorporated to be able to project from the side portion of the operation knob 4, and a cam mechanism 55 is incorporated in the operation knob 4 to transfer the driving force of the operation restriction release button to the movement direction of the slide member.

As illustrated in FIG. 3, a hollow portion 50A is formed on the front end side of the slide member 50, and a connection portion 9 for integrally mounting the operation lever 2 and the operation knob 4 is provided in the hollow portion 50A. The connection portion 9 is constituted by a pair of nuts 9A and 9A screw-fastened to the operation lever 2 and a locking frame 9B provided on the lower knob portion 4B of the operation knob 4. The locking frame 9B is sandwiched by the pair of nuts 9A and 9A such that the operation lever 2 is integrally attached to the operation knob 4.

The cam mechanism 55 is composed of a cam portion 56, formed by a cut-out from the lower surface of the operation restriction release button 54, and a contact 57 formed on the front end of the sliding member 50. The cam portion 56 includes a locking portion 56A that engages with the contact 57 to support the operation restriction release button 54 at a position protruding from the side portion of the operation knob 4, and an inclined cam surface 56B that is formed to be continuous with the locking portion 56A and allows the operation restriction release button 54 to be pushed and operated.

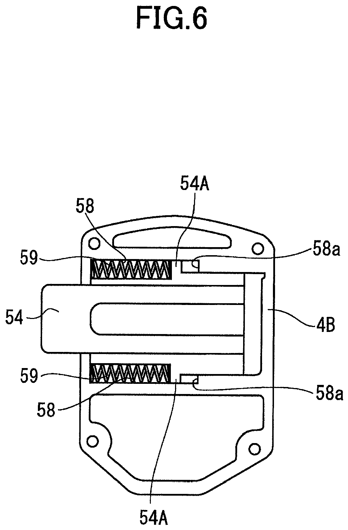

As illustrated in FIG. 6, guide grooves 58 that guide a reciprocating movement of the operation restriction release button 54 are formed on the lower knob portion 4B of the operation knob 4. On both side portions of the operation restriction release button 54, a pair of protruding locking pieces 54A and 54A is formed to fit in the guide grooves 58 and 58. Upon the locking pieces 54A and 54A being moved to positions in contact with end portions 58a and 58a of the guide grooves 58 and 58 by a pushing operation of the operation restriction release button 54, the operation restriction release button 54 becomes unable to be pushed any more. Coil springs 59 and 59 that bias the operation restriction release button 54 in one direction to prevent backlash are attached to the guide grooves 58 and 58.

Upon the operation restriction release button 54 being pushed in the direction of the arrow D in FIG. 5, the contact 57 is pushed along the cam surface 56B, and the slide member 50 is pushed down in the direction of the arrow E in FIG. 5. Due to the action of the cam mechanism 55, the pushing driving force of the operation restriction release button 54 is transferred to a push-down for the operation lever 2 (the direction of the arrow E in FIG. 5). Upon the slide member 50 being pushed down, the first locking portion 51A and the second locking portion 52A of the slide member 50 separate from the lower end edges 7a and 7b of the shift gate portion 7 and the operation restriction state with respect to the operation lever 2 of the lock mechanism 5 is released. Thereby, the operation lever 2 becomes able to be operated and moved. After the operation lever 2 is operated and moved, the operation lever 2 is configured to automatically return to the home position 7A by the return mechanism.

### (Action)

Next, an action of the shift device will be described. When the shift device 1 is in the state of the home position 7A illustrated in FIG. 3, the lock mechanism 5 acts and a movement operation of the operation lever 2 is restricted. At this time, the first locking portion 51A and the second locking portion 52A of the lock mechanism 5 are engaged with the lower end edges 7a and 7b of the gate portion 7.

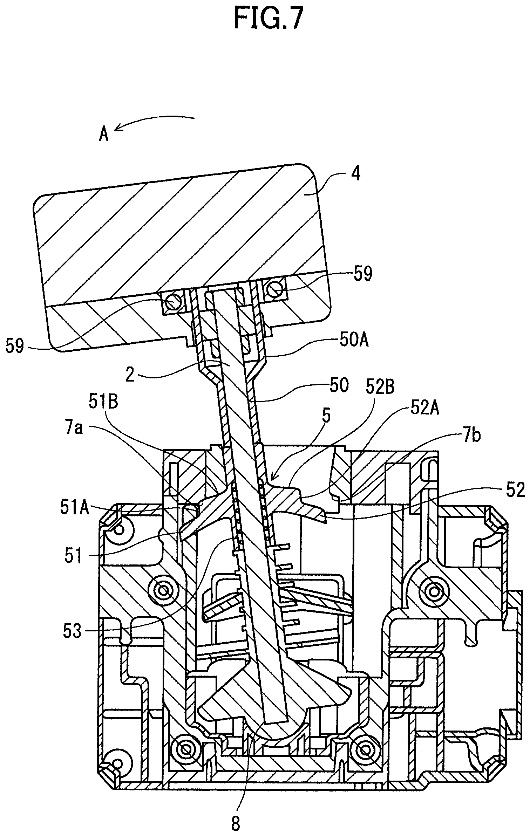

For example, when the operation lever 2 is operated to be moved from the home position 7A to the rear position 7D, the operation restriction release button 54 is operated to be pushed in the direction of the arrow D in FIG. 5. By this operation, the action of the lock mechanism 5 is released. Thus, the operation lever can be swung in the direction of the arrow A in FIG. 7 (the direction of the arrow A in FIG. 3), and the operation lever 2 can be operated to be moved in the direction towards the rear position 7D. Note that upon the operation lever 2 being operated to be moved to the rear position 7D, for example, a non-illustrated position detection unit incorporated in the housing 3, such as a magnetic sensor, detects that the operation lever 2 is operated to the rear position 7D. The detection signal detected by the magnetic sensor is transmitted to a gear driving unit, and the vehicle can select a state of reverse driving corresponding to the R position.

When the operation lever 2 is operated to be moved from the home position 7A to the front position 7C, the lock mechanism 5 is released in a manner similar to that of the movement operation of the rear position 7D, and the operation lever 2 is operated to be moved in the direction of the arrow B in FIG. 3. By this operation, it is detected by the magnetic sensor that the operation lever 2 is located at the front position 7C, and the vehicle can select a state of forward driving corresponding to the D position. Also, when the state of the vehicle is operated to be moved from the N position to the S position, a movement operation of the operation lever 2 from the home position 7A to the front position 7C is repeatedly performed twice. By the operations, first, the state of the vehicle changes from the N position to the D position, and subsequently, changes from the D position to the S position to enable deceleration driving corresponding to the S position. Also, the lighting display of the position display plate sequentially moves from the N position to the D position, and from the D position to the S position. Note that also when the operation lever 2 is returned to the home position 7A, because a detection signal corresponding to the position is transmitted to the gear driving unit, it is detected whether the operation lever 2 is reliably returned at the time of repeated operations.

As described above, according to the shift device 1 according to the first embodiment, because the solid operation lever 2 can be used as the operation lever 2, the strength of the operation lever 2 can be secured. Also, the components of the lock mechanism 5, such as the slide member 50, that restricts the movement operation of the operation lever 2 are attached to the outside of the operation lever 2, and the assembly property of the components of the lock mechanism 5 is favorable.

Further, because the locking portions 51A and 52A and the guide portions 51B and 52B constituting the lock mechanism 5 are formed together with the slide member 50, the number of components is few, the component cost can be reduced, and the assembling property is preferable.

Further, the restriction of the operation lever 2 can be released at the home position 7A, and the operation lever 2 can be operated to be moved in a desired direction reliably.

Further, because the operation knob 4 and the operation lever 2 can be mounted to be together inside the cylindrical slide member 50, the mounting space of the components is efficient and the movement amount of the slide member 50 can also be secured.

Further, because the operation lever 2 is necessarily returned to the home position 7A after a movement operation, a next movement operation can be easily and reliably performed.

### <Second Embodiment>

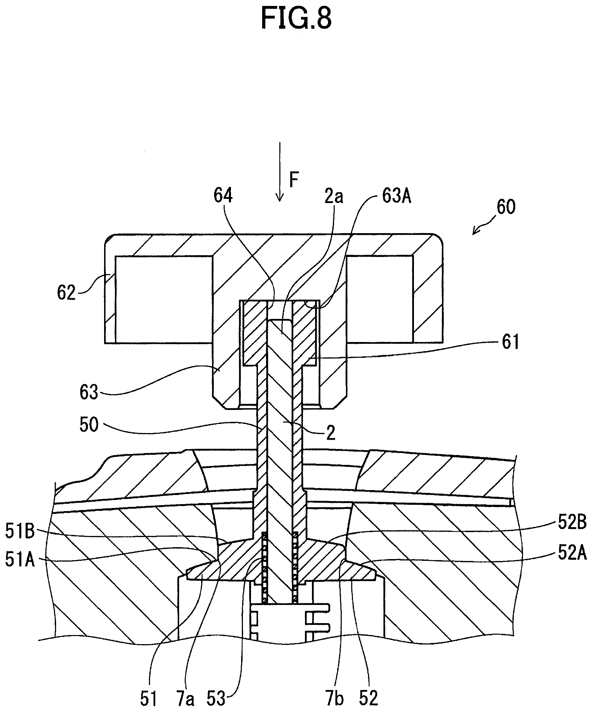

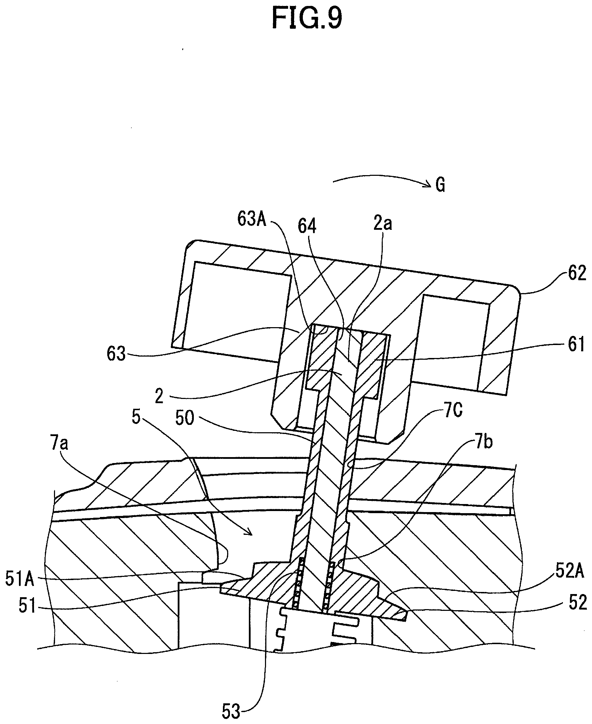

FIG. 8 is a cross-sectional view of a shift device according to a second embodiment of the present invention. FIG. 9 is a cross-sectional view illustrating a state in which the lock mechanism of the shift device, which is illustrated in FIG. 8, is released and operated to be at the D position. Because the shift device 60 of the second embodiment basically has the same configuration as that of the shift device 1 of the first embodiment except for the configuration for releasing the operation restriction of the lock mechanism 5, the same reference numerals are attached to the same elements such that their descriptions are omitted.

The cylindrical slide member 50 constituting the lock mechanism 5 of the shift device 60 is assembled to be able to be reciprocated along the outer periphery of the operation lever 2, its front end side is formed to have a larger diameter than that of the main body side, and a locking portion 61 is formed on the front end side. The locking portion 61 is fitted in a cylindrical portion 63 hanging down at the center portion of the rear surface of a cylindrical operation knob 62, and the slide member 50 is mounted together with the operation knob 62.

As illustrated in FIG. 8, when the slide member 50 is supported at the operation restriction position (at the home position 7A), a gap 64 for allowing a movement of the slide member 50 is formed between the tip 2a of the operation lever 2 and the upper surface 63A inside the cylindrical portion 63. On the base end side of the slide member 50, as in the shift device 1 of the first embodiment, protrusion portions 51 and 52, which constitute the lock mechanism 5, are formed, and locking portions 51A and 52 and guide portions 51B and 52B are formed on the protrusion portions 51 and 52.

As illustrated in FIG. 9, when the operation lever 2 is operated to be moved to the front position 7C in the shift device 60, the operation knob 62 is pushed in the direction of the arrow F in FIG. 8, against the biasing force of the compression coil spring 53 supporting the slide member 50 at the operation restricting position. By this operation, the slide member 50 is pushed until the tip 2a of the operation lever 2 makes with the upper surface 63A in the cylindrical portion 6, the respective locking portions 51A and 52A of the slide member 50 separate from the lower end edges 7a and 7b of the gate portion 7, and the operation restriction state with respect to the shift lever 2 of lock mechanism 5 is released. Subsequently, by swinging the operation lever 2 in the direction of the arrow G in FIG. 9, the operation lever 2 can be operated to be moved in the direction towards the front position 7C.

Also, when the operation lever 2 is operated to be moved from the home position 7A to the rear position 7D, the movement operation can be performed by releasing the operation restriction of the operation lever 2 by a pushing operation of the operation knob 62.

Note that, in the shift device 60, when the operation lever 2 is operated to be at a respective position, the position is detected by a shift position detection unit, such as a magnetic sensor, in a manner similar to that in the shift device 1 according to the first embodiment.

According to the shift device 60 according to the second embodiment, as with the shift device 1 according to the first embodiment, it is possible to release the restriction of the operation lever 2 at the home position 7A and to operate the operation lever 2 to move in a desired direction reliably.

### <Third Embodiment>

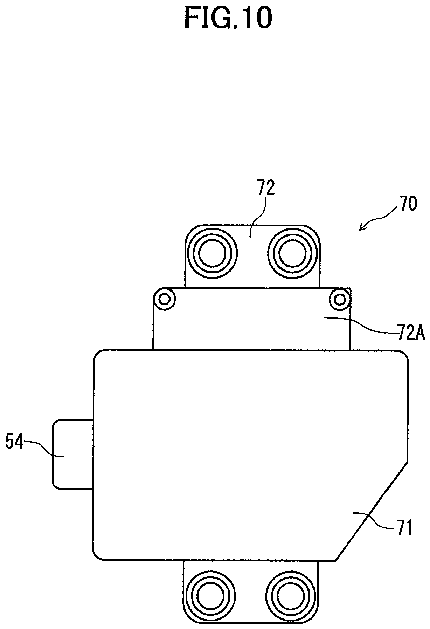

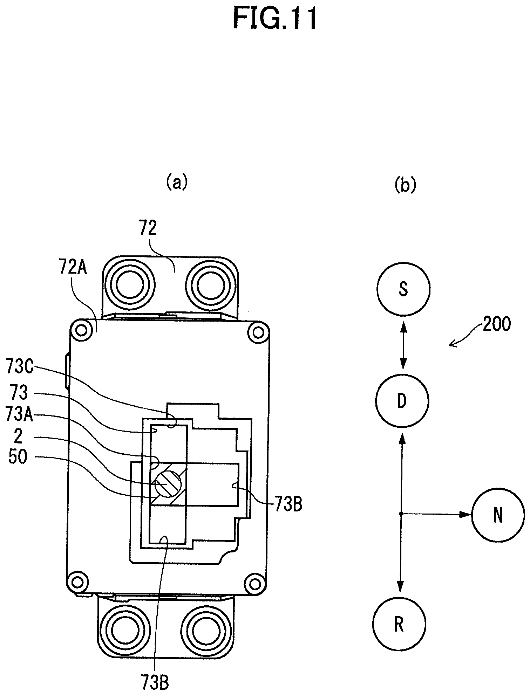

FIG. 10 is a plan view of a shift device according to a third embodiment of the present invention. FIG. 11 is a diagram that describes shift positions in which (a) is a plan view illustrating a gate portion of the shift device, and (b) is a schematic view illustrating an arrangement of the positions of the operation lever. Because a shift device 70 of the third embodiment basically has the same configuration as that of the shift device 1 of the first embodiment except for the configuration of an arrangement of positions, the same reference numerals are attached to the same elements such that their descriptions are omitted.

As illustrated in FIG. 10, in an operation knob 71 of the shift device 70, the operation restriction release button 54 is incorporated as in the shift device 1 of the first embodiment. An upper cover 72A is attached to an upper portion of a housing 72. As illustrated in FIG. 11 (a), a vertically long gate portion 73 for guiding and defining a movement operation direction of the operation lever 2 is opened and formed on the substantially central portion of the upper cover 72A. A home position 73A is provided at the central position of the gate portion 73. A front position 73C that is a first position and a rear position 73D that is a second position are provided at positions between which the home position 73A is interposed in the front-rear direction (vertical direction in FIG. 11 (a)). The N position 73B that is a neutral position of the operation lever 2 is provided at a position in a direction orthogonal to the operation direction of the front position 73C and the rear position 73D.

A position display plate (which is not illustrated) is attached near the upper cover 72A of the housing 72. As illustrated in FIG. 11 (b), on the position display plate, characters 200 that indicate the respective positions of the operation lever 2 are formed. When a driver operates the operation lever 2 to move to a respective position 73A, 73C, or 73D, the driver can operate the operation lever 2 to move to a desired position while confirming the characters 200 indicating the position state of the vehicle as in the shift device 1 of the first embodiment.

In the shift device 70, at the time of an operation for moving to the N position 73B, the following two-step operations are necessarily required. First, the operation restriction release button 54 is operated to be pushed at the home position 73A. By this operation, the restriction of the movement operation of the operation lever 2 is released. Subsequently, the operation lever 2 is operated to be moved from the home position 73A towards the N position 73B.

Note that, in the shift device 70, when the operation lever 2 is operated to be moved to a respective position, the position is detected by a shift position detection unit, such as a magnetic sensor, in a manner similar to that in the shift device 1 according to the first embodiment.

According to the shift device 70 according to the third embodiment, during driving, even when a driver's hand or the like touches the operation lever 2, the operation lever 2 does not switch to the N position 73B not intended by the driver. Therefore, the operation lever 2 can be reliably operated to be moved to the N position 73B as intended.

The present invention is not limited to the above-described embodiments. That is, within the technical scope of the present invention those skilled in the art may make various modifications, combinations, sub-combinations and substitutions with respect to constituent elements of the above described embodiments. For example, although the shift devices of the above described embodiments are a type of a shift device in which an operation lever automatically returns to the home position upon a movement operation being released, shift devices are not limited to this and may be a type of a shift device in which, even when the operation after a movement operation is released, an operation lever is retained at a shift position after the movement.

Also, the type and arrangement (shift pattern) of each shift position of the position display plate are not limited to the above described embodiments, and can be changed as appropriate.

Furthermore, although the operation restriction release button 54 is protruded in a direction perpendicular to the movement direction of the operation lever 2 in embodiments described above, the operation restriction release button 54 is not limited to this and may be changed to protrude frontward or backward in the same direction as the movement direction of the operation lever 2, for example.

### INDUSTRIAL APPLICABILITY

The present invention can be applied to various shift devices in which an operation lever is operated to be moved to a plurality of positions, and is also applicable to a multi-directional input device that inputs, according to operations of an operation lever in multiple directions, various signals.

### DESCRIPTION OF THE REFERENCE NUMERALS

- 1, 60, 70: shift device
- 2: operation lever
- 3: housing
- 4, 62, 71: operation knob
- 5: lock mechanism
- 7A: home position
- 9: connection portion
- 50: slide member
- 51A: first locking portion
- 52A: second locking portion
- 51B: first guide portion
- 52B: second guide portion
- 54: operation restriction release button
- 55: cam mechanism
- 73A: home position
- 73B: N position
- 73C: front position
- 73D: rear position

## Claims

1. A shift device (1) comprising:
an operation knob (4);
an operation lever (2); and
a lock mechanism (5) configured to restrict a movement operation of the operation lever (2) at a home position (7A),
wherein the lock mechanism (5) includes a cylindrical slide member (50) assembled to be movable in an axial direction along an outer periphery of the operation lever (2), and
wherein the movement operation of the operation lever (2) is restricted or its restriction is released, by a movement operation of the slide member (50);
wherein a locking portion (51A, 52A), which is configured to restrict the movement operation of the operation lever (2) at the home position (7A), and a guide portion (51B, 52B), which is configured to guide an operation of the operation lever (2) after the restriction of the movement operation of the operation lever (2) is released, are integrally formed on the slide member (50);
**characterized in that**
the operation lever (2) is configured to be operated to be moved to a plurality of positions by the operation knob (4) to select a driving state.

2. The shift device (1) according to claim 1, wherein an operation restriction release button (54) that is able to be pushed in a direction orthogonal to a movement direction of the slide member (50) is incorporated in the operation knob (4), a cam mechanism (55) that transfers a driving force of the operation restriction release button (54) to the movement direction of the slide member (50) is provided between the operation restriction release button (54) and the slide member (50), and the restriction of the movement operation of the operation lever (2) is released by a pushing operation of the operation restriction release button (54).

3. The shift device (1) according to claim 1 or 2, wherein the operation knob (4) and the operation lever (2) are integrally mounted by a connection portion (9) provided in the slide member (50).

4. The shift device (1) according to claim 1, wherein the slide member (50) is integrally attached to the operation knob (4), and the restriction of the movement operation of the operation lever (2) is released by pushing the operation knob (4) in the axial direction of the operation lever (2).

5. The shift device (1) according to any one of claims 1 to 4, further comprising: a return mechanism configured to automatically return the operation lever (2) to the home position (7A) after the movement operation of the operation lever (2).

6. The shift device (1) according to any one of claims 1 to 5, wherein a first position and a second position are provided at positions interposing the home position (7A) in a linear direction, and a neutral position of the operation lever (2) is provided at a position in a direction different from a movement operation direction of the first position and the second position.

## Patentansprüche

1. Schaltvorrichtung (1), die Folgendes aufweist:
einen Betätigungsknopf (4);
einen Betätigungshebel (2); und
einen Verriegelungsmechanismus (5), der dazu ausgebildet ist, eine Bewegungsbetätigung des Betätigungshebels (2) in einer Ausgangsposition (7A) zu unterbinden,
wobei der Verriegelungsmechanismus (5) ein zylindrisches Gleitelement (50) aufweist, das derart montiert ist, dass es in einer axialen Richtung entlang eines Außenumfangs des Betätigungshebels (2) beweglich ist, und
wobei durch einen Bewegungsvorgang des Gleitelements (50) die Bewegungsbetätigung des Betätigungshebels (2) unterbunden wird oder dessen Unterbindung aufgehoben wird;
wobei ein Verriegelungsbereich (51A, 51B), der zum Unterbinden der Bewegungsbetätigung des Betätigungshebels (2) in der Ausgangsposition (7A) ausgebildet ist, und ein Führungsbereich (51B, 52B), der zum Führen einer Betätigung des Betätigungshebels (2) ausgebildet ist, nachdem die Unterbindung der Bewegungsbetätigung des Betätigungshebels (2) aufgehoben worden ist, in integraler Weise an dem Gleitelement (50) ausgebildet sind;
**dadurch gekennzeichnet,**
**dass** der Betätigungshebel (2) dazu ausgebildet ist, durch den Betätigungsknopf (4) derart betätigt zu werden, dass er in eine Mehrzahl von Positionen bewegt werden kann, um einen Fahrzustand auszuwählen.

2. Schaltvorrichtung (1) nach Anspruch 1,
wobei in den Betätigungsknopf (4) ein Betätigungsunterbindungs-Freigabeknopf (54) integriert ist, der in eine Richtung orthogonal zu einer Bewegungsrichtung des Gleitelements (50) gedrückt werden kann, wobei zwischen dem Betätigungsunterbindungs-Freigabeknopf (54) und dem Gleitelement (50) ein Steuerflächenmechanismus (55) vorgesehen ist, der eine Antriebskraft des Betätigungsunterbindungs-Freigabeknopfes (54) in der Bewegungsrichtung des Gleitelements (50) überträgt, und wobei die Unterbindung der Bewegungsbetätigung des Betätigungshebels (2) durch eine Drückbetätigung des Betätigungsunterbindungs-Freigabeknopfes (54) aufgehoben wird.

3. Schaltvorrichtung (1) nach Anspruch 1 oder 2,
wobei der Betätigungsknopf (4) und der Betätigungshebel (2) durch einen in dem Gleitelement (50) vorgesehenen Verbindungsbereich (9) in integraler Weise angebracht sind.

4. Schaltvorrichtung (1) nach Anspruch 1 oder 2,
wobei das Gleitelement (50) an dem Betätigungsknopf (4) in integraler Weise angebracht ist und die Unterbindung der Bewegungsbetätigung des Betätigungshebels (2) durch Drücken des Betätigungsknopfes (4) in axialer Richtung des Betätigungshebels (2) aufgehoben wird.

5. Schaltvorrichtung (1) nach einem der Ansprüche 1 bis 4,
die außerdem Folgendes aufweist: einen Rückstellmechanismus, der dazu konfiguriert ist, den Betätigungshebel (2) nach der Bewegungsbetätigung des Betätigungshebels (2) automatisch in die Ausgangsposition (7A) zurückzubringen.

6. Schaltvorrichtung (1) nach einem der Ansprüche 1 bis 5,
wobei eine erste Position und eine zweite Position an Positionen vorgesehen sind, die die Ausgangsposition (7A) in einer linearen Richtung zwischen sich nehmen, und wobei eine neutrale Position des Betätigungshebels (2) an einer Position in einer Richtung vorgesehen ist, die sich von einer Bewegungsbetätigungsrichtung der ersten Position und der zweiten Position unterscheidet.

## Revendications

1. Dispositif de changement de vitesse (1) comprenant :
un bouton de commande (4) ;
un levier de commande (2) ; et
un mécanisme de verrouillage (5) configuré de manière à restreindre un mouvement du levier de commande (2) dans une position de repos (7A),
dans lequel le mécanisme de verrouillage (5) inclut un élément coulissant cylindrique (50) conçu pour être mobile dans une direction axiale le long d'une périphérie extérieure du levier de commande (2), et
dans lequel le mouvement du levier de commande (2) est restreint, ou bien sa restriction est levée, par un mouvement de l'élément coulissant (50) ;
dans lequel une partie de verrouillage (51A, 52A), configurée pour restreindre le mouvement du levier de commande (2) en position de repos (7A), et une partie de guidage (51B, 52B), configurée pour guider un mouvement du levier de commande (2) une fois que la restriction du mouvement du levier de commande (2) est levée, sont intégralement formées sur l'élément coulissant (50) ;
**caractérisé en ce que**
le levier de commande (2) est configuré pour être actionné afin d'être déplacé dans une pluralité de positions par le bouton de commande (4) en vue de sélectionner un état de conduite.

2. Le dispositif de changement de vitesse (1) selon la revendication 1, dans lequel un bouton de levée de la restriction de commande (54) pouvant être poussé dans une direction orthogonale à une direction de mouvement de l'élément coulissant (50) est incorporé au bouton de commande (4), un mécanisme de came (55) qui transfère une force d'entraînement du bouton de levée de la restriction de commande (54) à la direction de mouvement de l'élément coulissant (50) est prévu entre le bouton de levée de la restriction de commande (54) et l'élément coulissant (50), et la restriction du mouvement du levier de commande (2) est levée par une opération de poussée du bouton de levée de la restriction de commande (54).

3. Le dispositif de changement de vitesse (1) selon la revendication 1 ou 2, dans lequel le bouton de commande (4) et le levier de commande (2) ont intégralement montés par une partie de connexion (9) prévue dans l'élément coulissant (50).

4. Le dispositif de changement de vitesse (1) selon la revendication 1, dans lequel l'élément coulissant (50) est intégralement fixé au bouton de commande (4), et la restriction du mouvement du levier de commande (2) est levée en poussant le bouton de commande (4) dans la direction axiale du levier de commande (2).

5. Le dispositif de changement de vitesse (1) selon l'une quelconque des revendications 1 à 4, comprenant en outre : un mécanisme de retour configuré pour ramener automatiquement le levier de commande (2) à la position de repos (7A) après le mouvement du levier de commande (2).

6. Le dispositif de changement de vitesse (1) selon l'une quelconque des revendications 1 à 5, dans lequel une première position et une deuxième position sont prévues à des positions situées de part et d'autre de la position de repos (7A) dans une direction linéaire, et une position neutre du levier de commande (2) est prévue à une position qui se situe dans une direction différente de la direction de mouvement de la première position et de la deuxième position.
